# FASCICULE DE BREVET EUROPEEN

(11) **EP 0 557 139 B1**
(45) Date de publication et mention de la délivrance du brevet: **20.03.1996**
(21) Numéro de dépôt: 93400011.8
(22) Date de dépôt: 05.01.1993
(51) Int. Cl.: A23L 1/16

(54) **Lot de produits alimentaires à base de céréales en sachet perforé**
Nahrungsmittel auf der Basis von Getreiden in perforierten Beuteln
Cereal base foodstuff in 'boil in the bag' perforated sachet

(30) Priorité: 20.01.1992 FR 9200533
(43) Date de publication de la demande: 25.08.1993
(73) Titulaire: RIVOIRE ET CARRET LUSTUCRU, F-13003 Marseille (FR)
(72) Inventeur: Minier née Viard-Gaudin, Chantal Lucie Paulette, F-13400 Aubagne (FR)
(74) Mandataire: Bourgognon, Jean-Marie

(56) Documents cités:
- US-A- 3 615 712
- PATE STRIE "SEDANINI" DE GRAND ITALIA (STAR S.P.A., AGRATE BRIANZA, MILANO)
- PATRICIA LOUSADA: "Pasta Italian Style", 1988, J. Sainsbury PLC, London, GB; New Edition

## Description

Par le US-A-3 615 712, il est connu de présenter des produits alimentaires à base de céréale, tels que des pâtes, en sachets perforés en une matière à boullir, c'est-à-dire susceptible de résister au contact de l'eau bouillante, notamment en polyéthylène ou en poly(térépthalate d'éthylène). Chaque sachet contient la quantité de produit qui correspond à une ration ou à plusieurs rations. La ménagère n'a plus à prélever elle-même d'un lot de produits plus important la quantité qui correspond à la ration. Le sachet perforé fait office de passoire lorsque la cuisinière retire le sachet de l'eau bouillante après cuisson pour effectuer un égouttage. Une partie de l'amidon se dépose sur le sachet, de sorte que la casserole de cuisson reste plus propre et est plus facile à laver. Mais ces lots de produits en sachets ont l'inconvénient que la cuisson n'est pas homogène et surtout que les produits s'agglomèrent en cours de cuisson. C'est en particulier le cas pour des pâtes d'un format simple, trouées, lisses et denses, comme les coquillettes, les macaroni, les petites coquilles, les petits gnocchi, les confettis et autres.

L'invention pallie cet inconvénient par le fait que les produits alimentaires sont striés.

On constate en effet, d'une manière surprenante, que la présence de stries à la surface extérieure et, éventuellement, intérieure des produits supprime toute agglomération importante et persistante des produits entre eux lorsqu'ils sont cuits en sachet perforé et rend la cuisson complète et homogène.

Un prospectus intitulé "Grand' Italia sedanini", qui n'est pas daté et dont ne connaît pas la date de mise à la disposition du public, décrit des pâtes striées. Même si ce prospectus avait été à la disposition du public, il ne préconise pas de mettre les pâtes striées dans un sachet perforé à bouillir et n'indique pas l'avantage inattendu de défaut d'agglomération des stries dans le cas d'un ensachage dans un sachet de ce genre.

On obtient de bons résultats quand les stries ont une hauteur comprise entre 0,2 mm et 0,3 mm. Leur largeur est comprise, de préférence, entre 0,50 et 0,85 mm et l'intervalle entre deux stries consécutives est lui aussi compris entre 0,50 et 0,85 mm.

Lorsque les produits ont une forme longiligne, il est préférable, pour en faciliter la fabrication, que les stries s'étendent suivant la longueur.

De préférence, le rapport de la hauteur d'une strie à l'épaisseur d'un produit, la hauteur de la strie étant exclue, est inférieur à 0,5.

Des produits striés ne s'agglomèrent plus du tout lorsqu'ils sont placés dans un sachet à soufflet.

Les produits alimentaires peuvent être composées de farines, semoules ou autres dérivés de céréale, tels que de blé dur, blé tendre, riz, mais, seigle, orge, sarrazin, épeautre et d'ingrédients tels que des oeufs, des blancs d'oeuf, du lait, du gluten, de la poudre de légumes, ces ingrédients représentant de 0 à 25% du poids du produit, le reste étant essentiellement des céréales. L'invention s'applique tout particulièrement aux pâtes alimentaires fabriquées à partir de semoule de blé dur par pétrissage tréfilage et séchage.

Les perforations des sachets ont notamment des dimensions comprises entre 10 microns et 5.10³ microns. Les sachets sont en toute matière laissant passer l'eau et résistant à l'ébullition, par exemple en polyéthylène, mais aussi en papiers ou tissus dont les interstices forment les perforations.

Aux dessins annexés, donnés uniquement à titre d'exemple :
- la figure 1 est une vue en perspective d'un sachet de pâtes alimentaires suivant l'invention;
- la figure 2 est une vue en perspective d'une coquillette dont la surface extérieure est striée;
- la figure 3 est une vue en coupe d'une coquillette striée aussi à l'intérieur; et
- la figure 4 est une vue partielle d'une coquillette striée suivant l'invention.

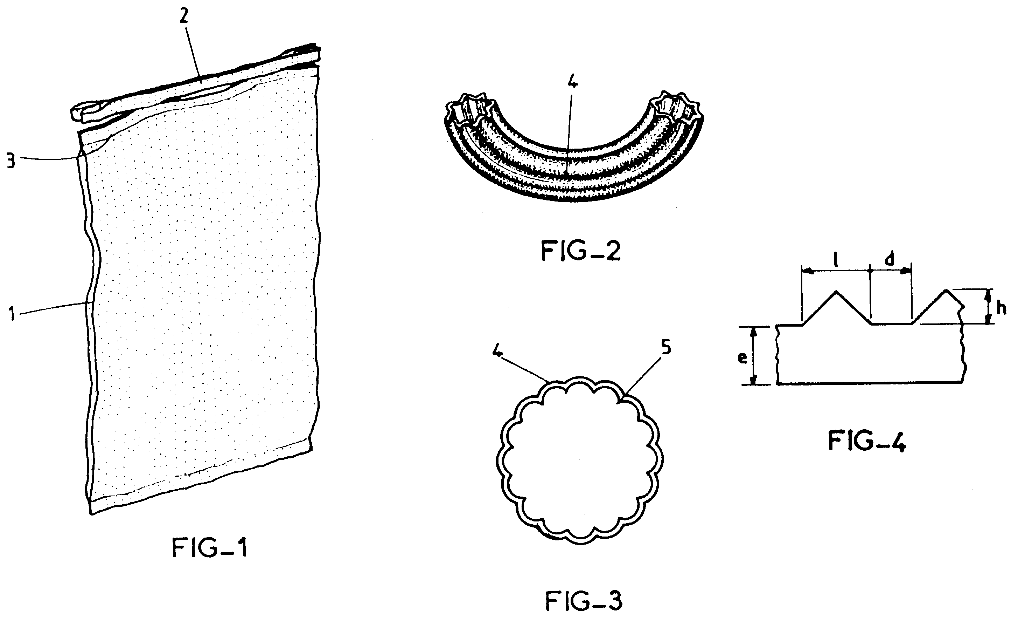

Le sachet contenant le lot de pâtes alimentaires représenté à la figure 1 est, à la manière classique, en polyéthylène et comporte un grand nombre de perforations de moins de 0,2 mm de diamètre. Le sachet est du type à soufflet. Le sachet 1 comporte, en partie supérieure, une anse 2, et une ligne 3 de rupture permettant de l'ouvrir et d'en vider le contenu.

La coquillette représentée à la figure 2 est en forme d'arc de tore. Elle comporte des stries 4 s'étendant suivant un tronçon d'arc de cercle à la surface extérieure, tandis que la coquillette représentée à la figure 3 comporte, non seulement des stries 4 extérieures, mais également des stries 5 à l'intérieur.

Comme le montre la figure 4, chaque strie a une hauteur h de 0,25 mm, une largeur 1 de 0,75 mm et la distance d entre deux stries voisines est de 0,75 mm. Le rapport entre la hauteur h d'une strie et l'épaisseur e d'une pâte est inférieur à 0,5.

A la figure 4, les stries ont une forme triangulaire, mais elles pourraient tout aussi bien avoir une forme ronde, rectangulaire, carrée, tronconique ou autre.

Les essais suivants illustrent l'invention.

### Détermination du temps minimum de cuisson :

Dans une casserole de 100 mm de hauteur et de 200 mm de diamètre, on porte deux litres d'eau à franche ébullition avec adjonction de 7 grammes de sel par litre. On y plonge deux sachets de pâtes en les tenant par la anse d'égouttage. On ne remue pas les pâtes pendant l'immersion. Dès la reprise de l'ébullition, on déclenche un chronomètre. On détermine le temps minimum de cuisson T en prélevant des pâtes en cours de cuisson en les écrasant entre deux plaques de plexiglas et en suivant la disparition d'une tâche blanche centrale dont la présence témoigne que l'amidon situé au coeur de la pâte est encore cru. Le temps minimum de cuisson est le temps qui correspond à l'instant où la tâche blanche a totalement disparue.

### Détermination du gonflement à T + 1 mn :

On mesure la quantité d'eau absorbée par les pâtes à l'instant T + 1 mn. A cet effet, on effectue la cuisson jusqu'à l'instant T + 1 mn, on retire les sachets de l'eau. Après égouttage pendant 1 mn on pèse les pâtes cuites. Le gonflement correspond au poids des pâtes cuites.

### Détermination du pourcentage de gonflement :

On calcule le rapport gonflement des pâtes cuites en sachet de cuisson/gonflement des pâtes cuites normalement.

On multiple la valeur obtenue par 100 pour avoir un pourcentage. Au-dessous d'une valeur de 95 %, le produit n'est pas cuit correctement. Les résultats obtenus sont consignés au tableau 1.

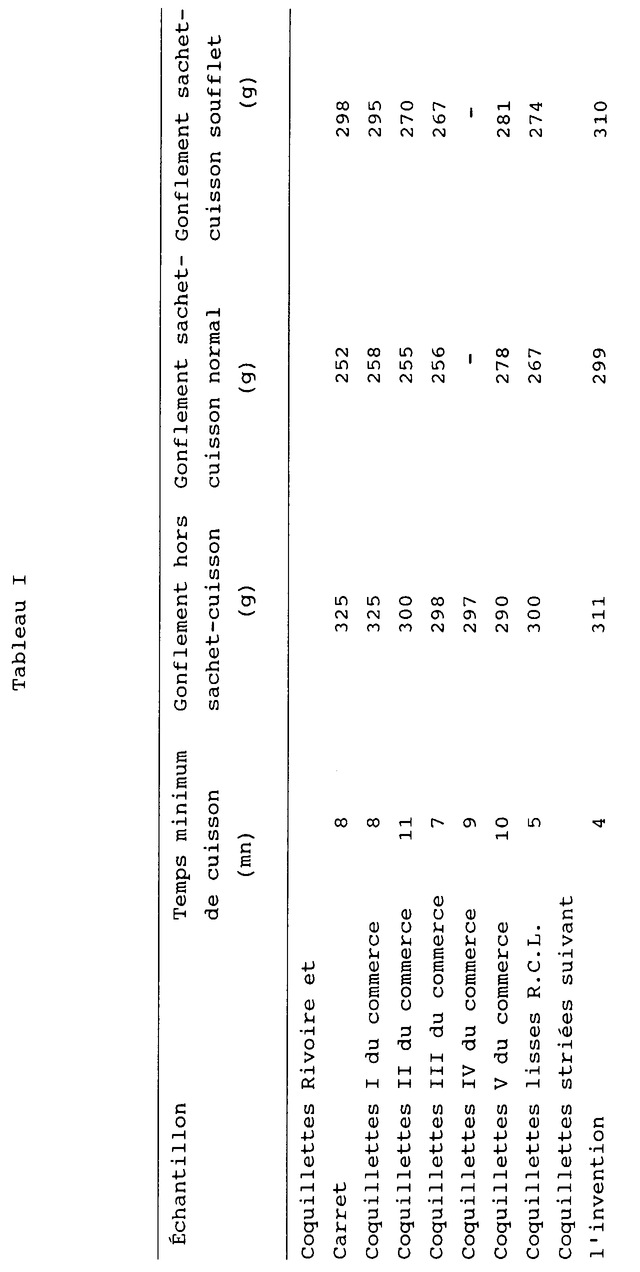

Les résultats obtenus au tableau I montrent que les coquillettes striées cuisent en 4 mn et que leur gonflement dans un sachet de cuisson normal, c'est-à-dire sans soufflet, atteint la valeur de 299 et en sachet à soufflet, la valeur de 310, valeur qui est sensiblement égale à celle de 311 du gonflement sans sachet de cuisson. Cette valeur du gonflement est bien supérieure à celle des autres pâtes non striées que ce soit en sachet de cuisson normal ou en sachet de cuisson à soufflet.

Le tableau II donne le pourcentage de gonflement de diverses sortes de pâtes. Là encore, ce sont les coquillettes striées suivant l'invention qui ont le meilleur pourcentage de gonflement.

Sur les coquillettes classiques lisses, on observe, après ouverture des sachets, des amas de coquillettes fortement agglomérés (cinquante à cent coquillettes). Ces coquillettes sont mal cuites (crues), l'amidon n'étant pas gélatinisé. De plus, elles sont mal hydratées. Ces agglomérats de coquillettes ne sont pas démottables facilement à la fourchette.

Sur les coquillettes striées, les phénomènes observés sont ceux d'une cuisson classique (hors sachet). Les coquillettes sont bien cuites et bien hydratées. On n'observe jamais plus de dix coquillettes collées entre elles. Ces petits amas sont très facilement détachables, contrairement aux coquillettes lisses, et sont très peu nombreux. Dans un sachet de cuisson à soufflet, les pâtes sont toujours parfaitement détachées.

**Tableau II**

| Échantillon | % Gonflement sachet normal | % Gonflement sachet à soufflet |
|---|---|---|
| Coquillettes Rivoire et Carret | 77,5 | 91,7 |
| Coquillettes I | 79,4 | 90,8 |
| Coquillettes II | 85,0 | 90,0 |
| Coquillettes III | 85,9 | 89,6 |
| Coquillettes V | 95,9 | 96,9 |
| Coquillettes lisses RCL | 89,0 | 91,3 |
| Coquillettes striées suivant l'invention | 96,1 | 99,7 |

## Revendications

1. Lot de produits alimentaires à base de céréale en sachet perforé en une matière à bouillir, caractérisé en ce que les produits sont striés.

2. Lot suivant la revendication 1, caractérisé en ce que les stries ont une hauteur comprise entre 0,2 et 0,3 mm.

3. Lot suivant la revendication 1 ou 2, caractérisé en ce que les stries ont une largeur comprise entre 0,50 et 0,85 mm.

4. Lot suivant l'une quelconque des revendications 1 à 3, caractérisé en ce que l'intervalle entre deux stries consécutives est compris entre 0,50 et 0,85 mm.

5. Lot suivant l'une des revendications 1 à 4, dans lequel les produits ont une forme longiligne, caractérisé en ce que les stries s'étendent suivant la longueur des produits.

6. Lot suivant l'une des revendications 1 à 5, dans lequel les produits sont tubulaires, caractérisé en ce que les stries sont prévues à la fois sur la surface extérieure et sur la surface intérieure des produits.

7. Lot suivant l'une des revendications précédentes, caractérisé en ce que le rapport de la hauteur des stries à l'épaisseur des produits est inférieur à 0,5.

8. Lot suivant l'une des revendications précédentes, caractérisé en ce que le sachet est à soufflet.

9. Lot suivant l'une des revendications 1 à 8, caractérisé en ce que les produits alimentaires sont des pâtes.

## Claims

1. Batch of cereal-based food products in a perforated sachet consisting of a boilable material, characterised in that the products are ridged.

2. Batch according to claim 1, characterised in that the ridges have a height of between 0.2 and 0.3 mm.

3. Batch according to claim 1 or 2, characterised in that the ridges have a width of between 0.50 and 0.85 mm.

4. Batch according to anyone of claims 1 to 3, characterised in that the gap between two consecutive ridges is between 0.50 and 0.85 mm.

5. Batch according to one of claims 1 to 4, wherein the products are elongate in shape, characterised in that the ridges extend along the length of the products.

6. Batch according to one of claims 1 to 5, wherein the products are tubular, characterised in that the ridges are provided both on the outer surface and on the inner surface of the products.

7. Batch according to one of the preceding claims, characterised in that the ratio of the height of the ridges to the thickness of the products is less than 0.5.

8. Batch according to one of the preceding claims, characterised in that the sachet is gusseted.

9. Batch according to one of claims 1 to 8, characterised in that the food products are pasta.

## Patentansprüche

1. Nahrungsmittel auf der Basis von Getreiden in perforierten Beutein aus kochbeständigem Material, dadurch gekennzeichnet, daß die Nahrungsmittel mit Riefen versehen sind.

2. Nahrungsmittel gemäß Anspruch 1, dadurch gekennzeichnet, daß die Riefen eine Höhe von 0,2 bis 0,3 mm aufweisen.

3. Nahrungsmittel gemäß Anspruch 1 oder 2, dadurch gekennzeichnet, daß die Riefen eine Breite von 0,50 bis 0,85 mm aufweisen.

4. Nahrungsmittel gemäß einem der Ansprüche 1 bis 3, dadurch gekennzeichnet, daß der Abstand zwischen zwei aufeinanderfolgenden Riefen 0,50 bis 0,85 mm beträgt.

5. Nahrungsmittel gemäß einem der Ansprüche 1 bis 4, wobei die Nahrungsmittel eine längliche Form aufweisen, dadurch gekennzeichnet, daß die Riefen sich über die Länge der Nahrungsmittel erstrecken.

6. Nahrungsmittel gemäß einem der Ansprüche 1 bis 5, wobei die Nahrungsmittel röhrenförmig sind, dadurch gekennzeichnet, daß die Riefen sowohl auf der Außenseite als auch auf der Innenseite der Nahrungsmittel angeordnet sind.

7. Nahrungsmittel gemäß einem der vorhergehenden Ansprüche, dadurch gekennzeichnet, daß das Verhältnis zwischen der Höhe der Riefen und der Dicke der Nahrungsmittel kleiner als 0,5 ist.

8. Nahrungsmittel gemäß einem der vorhergehenden Ansprüche, dadurch gekennzeichnet, daß der Beutel mit einem Balg versehen ist.

9. Nahrungsmittel gemäß einem der Ansprüche 1 bis 8, dadurch gekennzeichnet, daß die Nahrungsmittel Teigwaren sind.
